# EUROPEAN PATENT SPECIFICATION

(11) **EP 1 456 794 B1**
(45) Date of publication and mention of the grant of the patent: **20.02.2013**
(21) Application number: 02802583.1
(22) Date of filing: 23.12.2002
(51) Int. Cl.: G07F 17/12, G06F 17/00, G07F 17/10, G06Q 10/08

(54) **DELIVERY OF GOODS TO ELECTRONIC STORAGE LOCKERS**
WARENABLIEFERUNG AN ELEKTRONISCHE SCHLIESSFÄCHER
LIVRAISON DE MARCHANDISES DANS DES CASIERS DE STOCKAGE ELECTRONIQUES

(30) Priority: 21.12.2001 US 24472
(43) Date of publication of application: 15.09.2004
(73) Proprietor: Accenture Global Services Limited, Dublin 4 (IE)
(72) Inventor: PARK, Amy Sue, Chicago, IL 60610 (US); WILSON, Stephen, John, Kettering, Northamptonshire NN16 9RH (GB); BAKER, Stephen, James, Wilmslow, Cheshire SK9 2LJ (GB); RASMUSSEN, Henrik,, Chatswood, NSW 2067 (AU); TARAZI, Kamal, London SW1X 0BD (GB)
(74) Representative: Müller-Boré & Partner Patentanwälte
(86) International application number: PCT/US2002/041081
(87) International publication number: WO 2003/056490

(56) References cited:
- WO-A2-03/046782
- US-A- 4 204 635
- US-A- 5 223 829
- US-A- 5 231 272
- US-A- 5 475 378
- US-A- 5 894 277
- US-A- 6 010 064

## Description

### CROSS REFERENCE TO RELATED APPLICATION

### FIELD OF THE INVENTION

The invention relates to the distribution of goods. More specifically, the invention uses banks of electronically controlled lockers to distribute goods, where the electronic lockers are connected to and accessible by a network.

### BACKGROUND OF THE INVENTION

Distribution of replacement parts is a time and money consuming process for many businesses, especially those businesses that employ field operatives that must travel to various locations and rely on replacement parts in order to perform their jobs, such as repairing machines, plumbing, electrical wires, etc. For instance, in the plumbing industry, plumbers must generally travel to the location of the leak in order to fix it. If the faucet in a kitchen sink is dripping, the sink owner cannot take the faucet to the plumber for repair; rather the plumber must travel to the faucet in order to repair it. Similar situations exist in other industries, such as the heating/air conditioning industry, the electrical industry, electronics and high technology repair, e.g. Faxes, copiers, personal computers, domestic appliances, motor vehicle repair, service station maintenance, and sales brochures and catalogues for other goods and services representatives.

Generally, field operatives travel in a vehicle such as a light truck or van. As such, there is a limited amount of space in the vehicle in which to store an ample supply of replacement parts to use while fixing whatever it is that needs repair. Because of the limited amount of space, field operatives must often travel back to a central warehouse or parts distribution center to obtain replacement parts either when the field operative runs out of the replacement part required, or when the field operative does not carry the correct replacement part in the vehicle.

Generally, a single distribution center is designated to a specified geographic area. When a field operative needs a replacement part that he or she does not have in the vehicle, the field operative must drive to the distribution center for the geographic area in which he or she is presently located, or to which he or she is assigned. Because one distribution center is often assigned a large geographic area, travel time to and from the distribution center can take one hour or more each way, depending on the size of the geographic area, road size and availability, traffic and the like. To reduce the required travel time, more distribution centers could be built such that field operatives would not be required to travel as far to the nearest distribution center. However, this generally requires a substantial monetary investment by a company to build new distribution centers.

In addition to the above, working capital held in inventory often requires substantial overhead capital for a company. That is, when a company maintains a substantial inventory, e.g., millions of dollars in replacement parts, the company must purchase the parts from vendors, but might not recoup the cost until the part is used and paid for by a customer. This requires that a company invest a substantial amount of money into its inventory before it recoups any of the cost In addition, as is often the case with large inventories, parts held in inventory often become obsolete before they are used, requiring companies to absorb the cost of unused inventory.

Thus, a cost effective method and system for distributing goods is needed that reduces the time spent by field operatives to obtain the requested goods.

Document US 6,010,064 relates to a set of lockers allowing a customer to drop off commodities for a service company to pick up. An order is input using an operation screen, and an order sheet which specifies the locker number is issued.

Document US 5,894,277 relates to an electronic lock for use with lockers assigned for transitory or permanent use. The electronic lock has a keypad for entering a pre-selected sequence of digits.

Document US 5,475,378 relates to an electronic access control mailbox system comprising a plurality of mailbox stations. Each station consists of a locker of mailbox compartments, a card reader, and a local controller.

Document US 5,223,829 relates to an electric locker apparatus to be installed at a public space, such as entrance hall of a condominium, including a plurality of locker boxes of at least one type and a sensor for detecting whether the relevant locker box is occupied by an article.

Document US 4,204,635 relates to lockers of various designs, like those installed in railroad stations as self-service lockers for temporary storage of hand luggage, equipped with electromechanical remote control devices to permit opening or closing of locker doors.

### BRIEF SUMMARY OF THE INVENTION

The present invention relates to a method as claimed in claim 1 and a system as claimed in claim 4.

Preferred embodiment are defined in the dependent claims.

Is one embodiment, there is a method of distributing a parcel to a remote location. A distribution center receives a request for a desired parcel from a requestor. The desired parcel is delivered from the distribution center to a remote storage unit. Information corresponding to the remote storage unit is transmitted to the requestor.

In another embodiment, there is another method of distributing a parcel to a remote location. Parcel information corresponding to a desired parcel is transmitted. Locker information corresponding to a storage locker is received. The parcel is retrieved from the storage locker based on the received locker information.

In another embodiment, there is a method of providing storage locker service. A parcel is received at a storage locker from a first user. The parcel is stored in the storage locker. An open code is assigned to the storage locker, and locker information is transmitted to a second user, different from the first user, so that the second user can open the storage locker and retrieve the parcel.

In another embodiment, there is a method of facilitating the transfer of parts from a parts provider to a parts user. A request from a parts provider for an available storage locker is received. First and second open codes are assigned to the available locker. First identification information of the available locker is transmitted to the parts provider. Second identification information of the available locker is transmitted to a parts user.

In another embodiment, there is a method of providing promotional messages to users of locker banks. The method is performed by providing access to a storage locker in response to entry of an open code by a user and compiling information corresponding to use of locker banks by the user. Based on the compiled information providing a promotional message directed to the user at the locker bank.

In another embodiment, there is a method of distributing a parcel to a remote location, comprising a set of steps. A distribution center receives a parts request that includes an identification of at least one requested item. The requested item(s) is/are placed into a parcel, which is then delivered from the distribution center to one of a plurality of remote storage lockers. Information corresponding to one of the remote storage lockers is transmitted to a requestor, wherein the information includes the one remote storage locker's identity, and key information with which to open the one remote storage locker.

In another aspect, there is a system for delivering goods. There is a locker bank and a server. The locker bank contains a plurality of lockers, an input device, and a data processor communicatively coupled to the locker and to the input device. The data processor contains a processor and a memory that stores computer readable instructions that, when executed by the processor, cause the data processor to perform a set of steps. The data processor receives user-provided input through the input device, queries an authorization database for the user-provided input, and opens one of the plurality of lockers upon receiving a predetermined response to the query. The server is communicatively coupled to the locker bank, and contains a processor and a memory that stores computer readable instructions that, when executed by the server processor, cause the server to perform a second set of steps. The server receives a first notification from the locker bank that one of said lockers has received a parcel. The server assigns an open code to the one of said lockers. The server transmits information corresponding to the open code to an intended recipient of the parcel, and the server receives a notification from the locker bank that the one locker has been opened using said open code.

In another aspect, there is a storage unit comprising a plurality of lockable enclosures for storing goods, a sensor in each enclosure that detects the presence of a stored item in the enclosure, an input device, a processor, and a memory that stores computer readable instructions that, when executed by the processor, cause the storage unit to perform a set of steps, initiated by the storage unit receiving an open code via the input device. When the open code is an authorized open code, the storage unit unlocks one of the enclosures corresponding to the authorized open code. When the open code is a first open code, the storage unit allows the one enclosure to lock only when its sensor detects the presence of a stored item. When the open code is a second open code, different from the first open code, the storage unit allows the one enclosure to lock only when its sensor does not detect the presence of a stored item.

### BRIEF DESCRIPTION OF THE DRAWINGS

Figure 1 shows a block diagram of a computer used in an embodiment of the invention.
Figure 2 shows a system according to an embodiment of the invention.
Figure 3 shows a bank of storage lockers adapted for use with the invention.
Figure 4 shows a flowchart of an embodiment of the invention.
Figure 5 shows a specifically dimensioned box for interacting with a parcel sensor in a locker.
Figure 6 is a flowchart of another embodiment of the invention.
Figure 7 is a flowchart of still another embodiment of the invention.

### DETAILED DESCRIPTION OF THE INVENTION

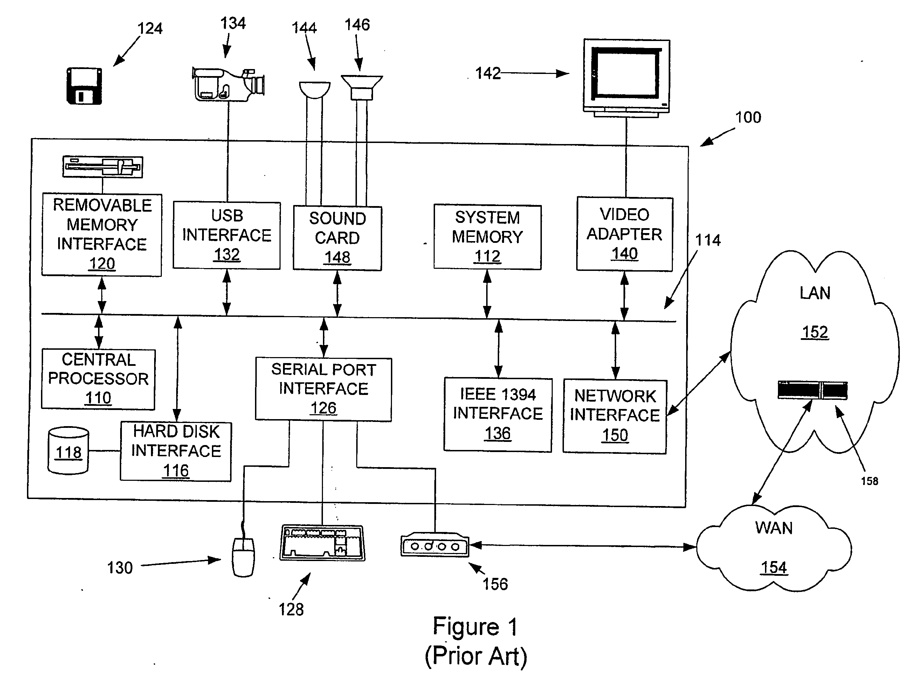

The present invention may be embodied in part on a computer system, such as the system 100 shown in FIG. 1. Computer 100 includes a central processor 110, a system memory 112 and a system bus 114 that couples various system components including the system memory 112 to the central processor unit 110. System bus 114 may be any of several types of bus structures including a memory bus or memory controller, a peripheral bus, and a local bus using any of a variety of bus architectures. The structure of system memory 112 is well known to those skilled in the art and may include a basic input/output system (BIOS) stored in a read only memory (ROM) and one or more program modules such as operating systems, application programs and program data stored in random access memory (RAM).

Computer 100 may also include a variety of interface units and drives for reading and writing data. In particular, computer 100 includes a hard disk interface 116 and a removable memory interface 120 respectively coupling a hard disk drive 118 and a removable memory drive 122 to system bus 114. Examples of removable memory drives include magnetic disk drives and optical disk drives. The drives and their associated computer-readable media, such as a floppy disk 124 provide nonvolatile storage of computer readable instructions, data structures, program modules and other data for computer 100. A single hard disk drive 118 and a single removable memory drive 122 are shown for illustration purposes only and with the understanding that computer 100 may include several of such drives. Furthermore, computer 100 may include drives for interfacing with other types of computer readable media.

A user can interact with computer 100 with a variety of input devices. Figure 1 shows a serial port interface 126 coupling a keyboard 128 and a pointing device 130 to system bus 114. Pointing device 128 may be implemented with a mouse, track ball, pen device, or similar device. Of course one or more other input devices (not shown) such as a joystick, game pad, satellite dish, scanner, touch sensitive screen or the like may be connected to computer 100.

Computer 100 may include additional interfaces for connecting devices to system bus 114. Figure 1 shows a universal serial bus (USB) interface 132 coupling a video or digital camera 134 to system bus 114. An IEEE 1394 interface 136 may be used to couple additional devices to computer 100. Furthermore, interface 136 may be configured to operate with particular manufacturer interfaces such as FireWire developed by Apple Computer and i.Link developed by Sony. Input devices may also be coupled to system bus 114 through a parallel port, a game port, a PCI board or any other interface used to couple an input device to a computer.

Computer 100 also includes a video adapter 140 coupling a display device 142 to system bus 114. Display device 142 may include a cathode ray tube (CRT), liquid crystal display (LCD), field emission display (FED), plasma display or any other device that produces an image that is viewable by the user. Additional output devices, such as a printing device (not shown), may be connected to computer 100.

Sound can be recorded and reproduced with a microphone 144 and a speaker 146. A sound card 148 may be used to couple microphone 144 and speaker 146 to system bus 114. One skilled in the art will appreciate that the device connections shown in figure 1 are for illustration purposes only and that several of the peripheral devices could be coupled to system bus 114 via alternative interfaces. For example, video camera 134 could be connected to IEEE 1394 interface 136 and pointing device 130 could be connected to USB interface 132.

Computer 100 can operate in a networked environment using logical connections to one or more remote computers or other devices, such as a server, a router, a network personal computer, a peer device or other common network node, a wireless telephone or wireless personal digital assistant. Computer 100 includes a network interface 150 that couples system bus 114 to a local area network (LAN) 152. Networking environments are commonplace in offices, enterprise-wide computer networks and home computer systems.

A wide area network (WAN) 154, such as the Internet, can also be accessed by computer 100. Figure 1 shows a modem unit 156 connected to serial port interface 126 and to WAN 154. Modem unit 156 may be located within or external to computer 100 and may be any type of conventional modem such as a cable modem or a satellite modem. LAN 152 may also be used to connect to WAN 154. Figure 1 shows a router 158 that may connect LAN 152 to WAN 154 in a conventional manner.

It will be appreciated that the network connections shown are exemplary and other ways of establishing a communications link between the computers can be used. The existence of any of various well-known protocols, such as TCP/IP, Frame Relay, Ethernet, FTP, HTTP and the like, is presumed, and computer 100 can be operated in a client-server configuration to permit a user to retrieve web pages from a web-based server. Furthermore, any of various conventional web browsers can be used to display and manipulate data on web pages.

The operation of computer 100 can be controlled by a variety of different program modules. Examples of program modules are routines, programs, objects, components, data structures, etc., that perform particular tasks or implement particular abstract data types. The present invention may also be practiced with other computer system configurations, including hand-held devices, multiprocessor systems, microprocessor-based or programmable consumer electronics, network PCS, minicomputers, mainframe computers, personal digital assistants and the like. Furthermore, the invention may also be practiced in distributed computing environments where tasks are performed by remote processing devices that are linked through a communications network. In a distributed computing environment, program modules may be located in both local and remote memory storage devices.

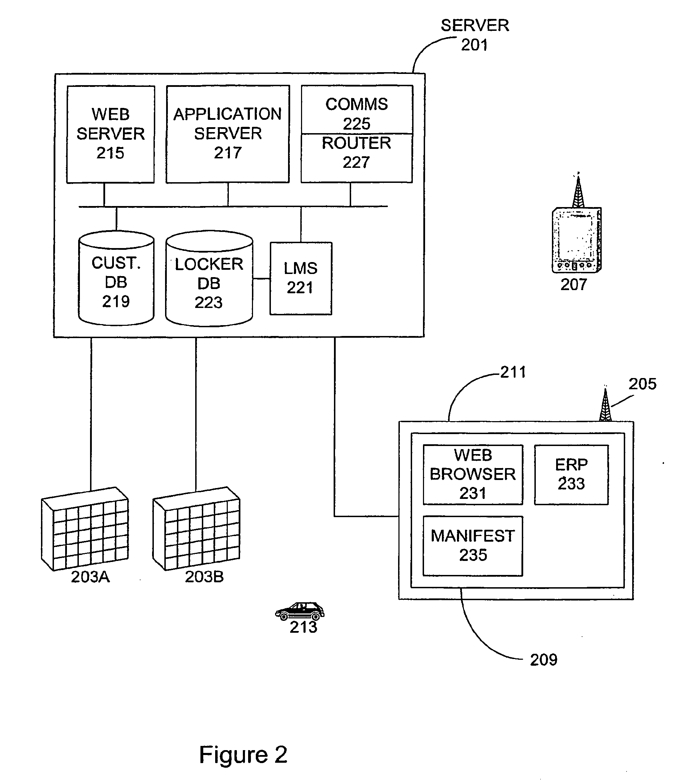

A first aspect will now be described with reference to FIG. 2. There is a server 201 connected to remote storage locker banks 203a, 203b. The server 201 may comprise a web server 215, an application server 217, a customer database 219, a locker management system 221, a locker database 223, communications equipment 225, and router 227. Connected to the server via a network is a client computer 209, which may be located in a distribution center 211, or in any other convenient location for a parts distributor. The client computer may communicate with at least one remote unit 207 using wireless communications via transceiver or other wireless communications equipment 205. Any known wireless communication technology may be used, such as CDMA, AMPS, GSM (e.g., via SMS), Bluetooth, or the like. Alternatively, client computer may communicate with remote unit 207 via conventional hardwired networks.

The remote unit 207 may be located in a field operative's vehicle such that the field operative may transmit and receive information while out in the field working on a job. While the remote unit 207 is depicted in FIG. 2 as a personal digital assistant (PDA), the remote unit may be a laptop computer, mobile telecommunications unit, or any other remote data processing device that can receive information through any network. Individual remote units, often referred to in the art as hammerheads, may be mounted in each field operative's vehicle. A separate vehicle 213 may be used to transport goods from the distribution center 211 to each of the locker banks 203a, 203b in preparation for receipt by a field operative.

Ideally, locker banks 203 are interspersed throughout a geographic area such that a field operative is not required to travel far to the closest locker bank, generally measured from each field operative's base of operations, such as a home, field office for multiple field operatives, or the like. Locker banks 203 may also be located near common work locations, such as industrial parks that require frequent services and repairs, or from any other field operative's work location.

As previously stated, while FIG. 2 only depicts one remote unit 207, each field operative, or group of field operatives when they travel and work together, may have his or her own remote unit 207.

Within the server 201, a locker management system (LMS) 221 controls communications with each bank of storage lockers, sending and receiving authentication and authorization information from locker database 223 to specified banks of lockers. Customer database 219 may contain information about each distributor and each receiver of goods, as well as information about specific parcels and events (e.g., parcel 3214 for customer Acme Ltd. was delivered to locker 12 on 20 July 2001 at 14:37). Application server 217 provides a user interface over a network to remote users via the web server 215. Router 227 routes communications to the appropriate location, e.g. locker bank 203a, locker bank 203b, and client computer 209, via communications equipment 225 connected to the network.

Within the client computer 209, a web browser 231 may be used to interact with the LMS via the network, the web server 215, and the application server 217. The computer 209 may also comprise enterprise resource planning (ERP) software 233 to perform client order processing. A shipping manifest 235 contains information regarding requested goods to be delivered to one or more field technicians via the various storage lockers at each remote bank of storage lockers. The manifest information may be stored in the memory of computer 209, or it may be a paper manifest whose contents are manually entered via the application server.

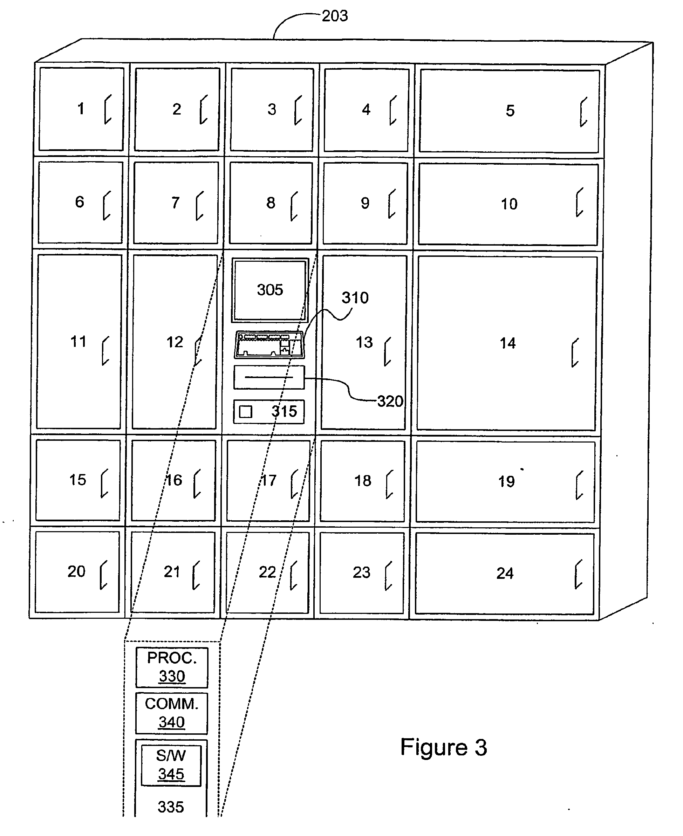

With reference to FIG. 3, each locker bank 203 may comprise one or more lockers 1-24, a display device 305, keypad, keyboard, or other user input device 310, key reader 315, and printer 320. As shown in FIG. 3, individual lockers may be of a variety of sizes so as to fit various individual items or parcels containing more than one item. The lockers may alternatively be sized uniformly, depending on a distributor's needs, the size of typical items, and the like. Display device 305 may be any known display device such as a conventional monochrome or color CRT display device, LCD screen, touch sensitive display screen, plasma screen or the like. Input device 310 may be a numerical keypad, conventional computer keyboard, touch sensors in the display device, or any other device that a user may use to convey information to the system. Key reader 315 may be an electronic, magnet, or optical card reader, bar code scanner, or any other device that may be used to read an entry key. Printer 320 may be a receipt printer as is known in the art, or any other device that can generate physical copies of information for later review and/or use.

Also located in the locker bank, in one embodiment behind the display device, input device, key reader, and printer, is a central processor 330, memory 335, and communications equipment 340. Each locker 1-24 is communicatively coupled to the processor 330, such that the processor may at least selectively open lockers and determine whether each locker is in an open or closed state. Memory 335 stores locker application software 345 comprising computer readable instructions that, when executed by the processor, allow the processor to control all functions of the locker bank, including input, output, authentication and authorization of users, and the operation of lockers at least as discussed above. The memory may also store parcel events to be sent in batches to a central server.

Each locker bank may operate in a variety of ways, and there is no requirement that locker banks operate uniformly throughout the network. A first type of locker bank may operate using PIN codes. A user may receive a PIN code that allows the user to unlock and open a specific locker. The user may enter the locker number and pin using the input device 310, in this instance a numeric keypad. Upon successfully entering the locker number and PIN, the locker is automatically caused to open by the processor 330. Alternatively, the user may simply enter the PIN, after which a locker corresponding to the PIN may automatically open. The locker bank 203 may communicate with central server 201 to authenticate the user and/or PIN, or the memory may contain locker information specific to each bank of lockers. Alternatively, the processor may only cause the specified locker to unlock, such that the user may then open the locker. If the processor only unlocks the locker, the user is provided an indication in which locker the goods are located, such as by a flashing light, a message on the display screen, or the like.

In a second type of locker bank, key reader 315 may be a bar code scanner. The user may receive a printed information sheet regarding which locker contains his or her goods. On the information sheet may be a bar code, which the key reader may scan to determine whether the user is authorized to open a user-specified or predetermined locker. Upon presenting a bar code representing a correct authorization, the corresponding locker may automatically open.

In another embodiment, the key reader may be a card reader. The user may use a key card, or smart card, to identify him or herself to the bank of lockers. If the locker processor identifies the user, the processor may grant access to the user to a predetermined or specified locker depending on the authorization and/or locker information contained in memory 335 or in central server 201.

In yet another embodiment, multiple input devices may be combined. For instance, a card reader may be combined with the use of PIN codes. The card reader may be used to identify a specific user, while a specific PIN code may be used to authorize delivery and/or pickup of a specific shipment of goods to or from that user, where the user may have multiple shipments of goods.

Using the above-described infrastructure, parts distributors can efficiently provide replacement parts to field operatives, while requiring the field operatives to spend less travel time in obtaining the replacement parts. In addition, companies employing the field operatives can reduce inventory by only ordering that which is needed for a specific job or is needed for a specific day. Also, parts distributors can rationalize their current distribution networks to centralize inventory, thereby releasing current distribution assets.

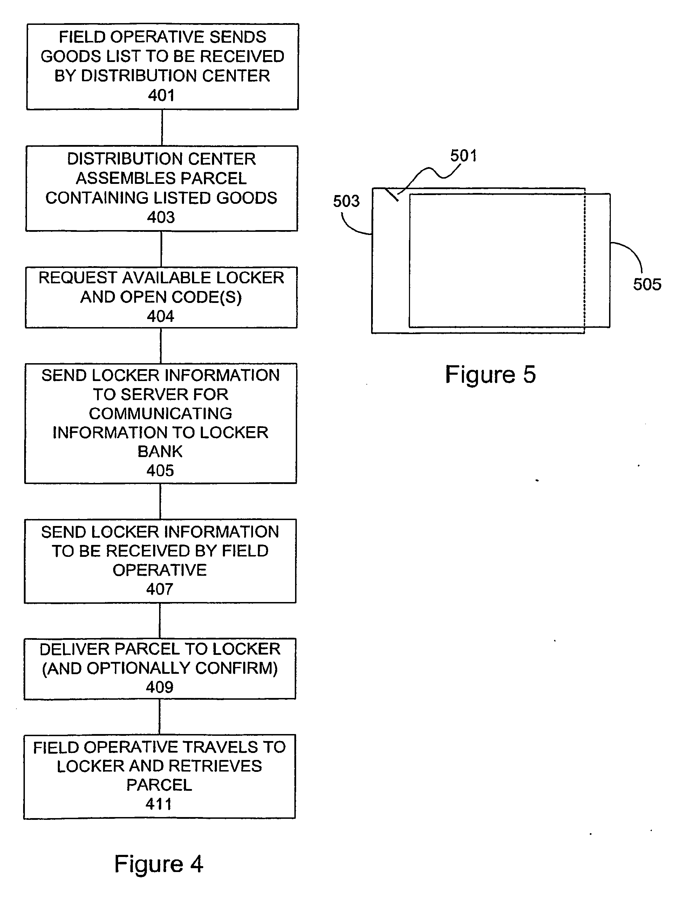

With reference to FIG. 4, there is a method of distributing goods using the above-described infrastructure. In step 401, a field operative transmits a list of requested goods to his or her distributor. The requested goods may be replacement parts used during the present day's repairs, or they may include special parts not normally carried, but which are required for a special purpose or job. The list is received by the client computer, and conveyed to the appropriate personnel at the distribution center. In step 403, personnel at the distribution center assemble a parcel containing the requested goods. A parcel may comprise one or more packages/boxes of one or more goods, depending on the amount and size of the goods requested. Alternatively, in step 403, the distribution center may be automated using known technologies, such that upon receipt of the list of requested goods, the distribution center can automatically assemble the requested goods into a parcel. The parcel is later transported to a storage locker in a bank of storage lockers, further described below.

The specific storage locker in which the parcel is to be placed is selected in step 404. The locker may be selected at the time the parcel is delivered to a storage locker or at any time beforehand. In a preferred embodiment, the locker is chosen for its close proximity to the field operative or the field operative's base of operations, such as his or her home. In the automated distribution center, the parcel may have a delivery label placed on the outside of it that contains information regarding the locker bank to which the parcel is to be delivered, the specific locker in which the parcel is to be placed (optional), and first key information for opening the locker such that the delivery personnel can place the parcel in the locker. In step 405, the automated distribution center may electronically transmit the same locker information as is on the label to server computer 201 using client computer 209, and further transmit second key information such that the field operative may open the locker to receive the parcel. The server computer may then analyze the information, and further transmit the locker number and key information to the specified bank of storage lockers.

Alternatively, the central server 201 may generate the codes used to open the lockers by both the delivery person and the recipient. This may be done in advance, by providing a range of numbers to be used by a given customer, or one at a time as a parcel is registered to be delivered to a specific locker bank. In step 404, when a locker bank location is selected, the parcel is registered with server 201 to be delivered to the selected locker bank, and codes assigned to it.

Separately, in step 407, the distribution center may communicate the locker information and second key information to a remote unit 207 corresponding to the requesting field operative. The remote unit to which the information is sent may be selected based on a received identity of a field operative, or the information may simply be communicated to the same remote unit from which the original request was received. Other selection criteria may alternatively be used. Optionally, the distribution center may also communicate to the remote unit a confirmation manifest listing the items placed in the parcel for receipt by the field operative.

In step 409, the parcel is delivered to the specified storage locker in the specified locker bank. When the delivery personnel arrives at the bank of lockers he or she can open the specified locker according to the information on the parcel label. If the locker bank operates using PINs, the delivery personnel may enter the locker number (optionally) and PIN to open the specified locker. If the locker bank uses bar codes or key cards, the delivery personnel may scan a bar code corresponding to the parcel, or verify his or her personal key card, using key reader 315. Upon successfully opening the locker, the delivery personnel may place the parcel in the locker and then close the locker.

In step 411, the field operative retrieves the parcel containing the requested goods. When the field operative arrives at the locker bank at some time after the delivery personnel, the field operative may open the specified locker using the second key by entering the PIN, scanning the bar code, swiping his or her key card, or the like. It should be noted that, in the case of PINs and bar codes, the first and second keys may be, but are not required to be, the same. Upon successfully entering his or her key, the field operative may open the locker (or the locker bank automatically opens the locker), and retrieve the parcel containing the goods.

As should be apparent to those of skill in the art, the above steps may be performed in other than the recited order, and functions may be performed by other than that cited above. For instance, the exact locker might not be determined until the parcel arrives at the specified locker bank. The locker bank processor 330 may execute software 335 stored in memory 335 to determine an available locker, and assign each locker as it is immediately needed. The locker band may indicate the assigned locker to the delivery personnel by flashing a light near the locker (not shown), by automatically opening the locker, or other notification means. Likewise, the recipient might not know which specific locker his or her parcel is stored in until he or she enters the open code, swipes a key card, or the like.

In some embodiments (not shown), after the delivery personnel places the parcel in the locker, the delivery personnel may enter information using the input device 325 to confirm that the parcel has been placed in the locker. This information may be communicated through server computer 201 to the client computer 209. Upon receipt of the confirmation, the original requesting field operative may receive a notice via remote unit 207 that his or her parcel is ready for pickup. Alternatively, the requesting field operative may not receive locker information regarding his or her request until the parcel has been placed in a locker and confirmed as above. The delivery of the parcel may be automatically confirmed to the server computer by recording the use of the corresponding code. As codes are uniquely assigned to a specific parcel, this will uniquely confirm delivery or pick up of the parcel, without any required input on the part of delivery personnel or recipient.

The parcel of requested goods generally should fit in its intended locker, or the delivery may not be able to be made. If delivery personnel attempt to deliver a parcel that is bigger than the specified locker, the parcel is generally returned to the distribution center, repackaged, and redelivered to its intended destination in a parcel of a size that will fit in the locker. Alternatively, the parcel may be stored with the locker bank location provider, as described below. Because each individual locker contains a limited amount of storage space, custom-sized boxes may be used for each parcel to ensure that the parcel will fit in its specified destination locker. That is, boxes may be specifically constructed to the various dimensions of each of the various sized lockers. The box dimensioned to fit the specified destination locker may then be used when assembling the parcel to ensure that the parcel is not bigger than the destination locker.

Because it is possible that a delivery person may accidentally allow a locker to close before inserting the parcel, or a field operative may allow a locker to close before retrieving the parcel, locker banks may be adapted with a sensor in each locker to determine whether or not a parcel is in the locker. The sensor may be a pressure pad, an electro-mechanical switch, or any other device known in the art to indicate the presence or absence of an item in a locker. The sensor may be used to ensure that each locker only closes after the parcel has been delivered or retrieved, depending on the open code used to gain access to the locker. Thus, in embodiments where each open key is valid only once, the locker will only close after being opened by a delivery person when there is a parcel in the locker, and the locker will only close after being opened by a field operative when there is not a parcel in the locker. Alternatively, in embodiments where open keys are valid more than once, or for a predetermined duration or amount of time, the user may simply reenter the key to open a locker that was accidentally closed. The sensor may also be used to confirm delivery of a parcel, as discussed above, before sending open code information to a field operative.

Alternatively, when an item is accidentally or otherwise left in a locker when it should not be, the locker bank sounds an audio warning or provides some other notification to the user, but allows the locker to lock. In this manner the locker bank avoids the situation where a recipient walks away, leaving the locker open with a parcel inside.

If for any reason (e.g. the parcel does not fit the locker) the delivery person needs to close the locker without inserting the parcel, an override code or confirmation may be entered using the input device 310 to allow the delivery person to close the locker. Similarly, if the field operative needs to leave the parcel in the locker but after opening the locker is unable to do so (e.g., because the locker contains the wrong parcel), a similar override code or confirmation may be entered.

Optionally, as shown in FIG. 5, a parcel sensor 501 in a locker 503 may be designed such that only a specifically dimensioned box 505 will trigger the sensor. FIG. 5 shows a side view of a specifically dimensioned box in relation to its corresponding locker adapted with a parcel sensor. The sensor 501 may be placed near the top rear of the locker such that a parcel that substantially fills the entire locker will trigger the sensor, while a parcel that does not substantially fill the entire locker will not trigger the sensor. Other sensor locations are also possible, such as on the rear wall of the locker, or other suitable location.

As previously discussed, the locker banks may be interspersed throughout a geographic area. Because each locker bank is of a limited size, it may easily be placed in a variety of locations. For instance, a locker bank will easily fit in or around a service station, post office, grocery store, retail store, auto parking lot, railway station, or the like, collectively referred to herein as locker bank location providers. This has the advantage that the delivery personnel and/or the field operative, when using the locker bank, may also then patronize the store or service station at which the locker bank is located.

As stated above, each locker bank may contain a printer 320. In conventional locker banks, such as those found at airports and train stations, the user that places an item in a locker is generally the same user that retrieves the item from the locker. In those systems, the printer is often used to print the locker number and PIN code for the user so that the user can easily remember in which locker the item is stored and how to retrieve it. However, using the present invention, this will not work because the user that places the parcel in the locker is not the user that retrieves the parcel from the locker. Thus, a printed receipt containing the locker number and PIN does no good to the delivery personnel because they generally will not need to reopen the locker.

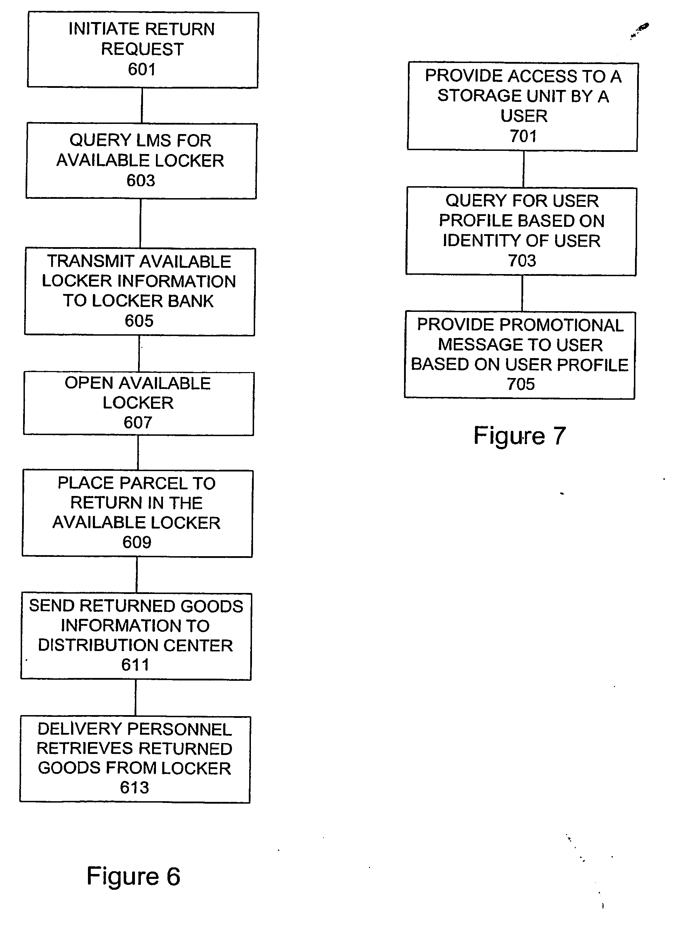

In one embodiment of the invention, shown in FIG. 7, the printer may be used to generate promotional messages, advertisements, coupons, or the like that the user, i.e. the delivery personnel or the field operative, receives upon successfully completing a transaction at the locker bank. In step 701, a user is given access to a storage locker. The user may be the parts provider or delivery personnel gaining access to a locker in order to place a parcel, the field operative gaining access to a locker in order to retrieve a parcel, or any other intended user of the locker bank. The identity of the user may be determined based on the open code used to gain access to the locker.

After determining the identity of the user, the system queries a database for the user's profile in step 703. The user profile may be stored in the server computer as part of the customer database, or in the memory of each locker bank that a user uses. The user profile may be updated upon completing each transaction, and may contain information such as age, gender, and history information regarding previous transactions including, but not limited to, times and locations of previous parcel pickups or drop-offs, and types of goods picked up or dropped off. A promotional message is then generated in step 705 based on the received user profile. In some embodiments (not shown), user profiles are not used, and promotional messages are selected randomly or based on fees paid by the entity to which the promotional message relates, or any other suitable selection criteria or algorithm. For instance, the promotion may be based on the user's employer and their job. That is, one promotion may be provided for delivery personnel, a second promotion may be provided for recipients from utility company 1, another promotion may be provided for recipients from utility company 2, and so forth.

Alternatively to printing, a promotional message may be generated on the display device. Upon completing a successful transaction, whether dropping off or picking up a parcel, an advertisement may be displayed on the display device for the user to view. As with the printer, the promotional message may or may not be directed to the locker bank location provider.

In one embodiment, the server 201 maintains a profile for each locker bank, including information such as the number of distinct users, the number of times used, frequency and time of visits and like information for usage tracking purposes. This information may then be used for marketing or sales purposes, depending on the system operator's needs.

Providing promotional messages may also act as an incentive to potential locker bank location providers to allow a locker bank to be placed on their premises. That is, as an incentive to a service station to place a locker bank on their property, the locker bank may be configured to print coupons that may be used in a convenience store portion of the service station. Also, by placing a locker bank on their premises, a service station increases the likelihood that the field operative will refuel his or her vehicle at that service station in addition to patronizing the convenience store.

The display device and keyboard may also be used to send a text message to or from the person delivering or collecting the parcel. The message may be displayed when the other person enters the PIN number for the pickup or delivery. In this manner a deliverer can send a message to a recipient who may not have access to a mobile phone (or other communication device), or if the user's mobile phone is switched off and vice versa. In addition, the display and keyboard may be used to send a SMS message to inform a user that a package is available, to relay specific instructions or any other special information. For instance, a delivery person may send an SMS message to the intended recipient, informing the recipient that the package is available. The SMS message destination information may be entered by the sender or, alternatively, stored in either the locker bank or the server and retrieved by looking up the recipient that corresponds to the shipment.

Placing locker banks near retail stores or service stations also provides the benefit of extra storage space should the locker bank be full. That is, when a locker bank is filled with orders from other field operatives, the locker bank location provider may temporarily store the parcel until the field operative can retrieve the parcel. The field operative may receive locker bank information as usual, but receive a message such as "see locker bank location provider" instead of a specific locker number. The field operative may then retrieve his or her parcel directly from the proprietor of the locker bank location provider. Alternatively, the recipient may receive a PIN code as he or she otherwise would. However, when the recipient enters the PIN code, the locker bank may display a message on the display device informing the recipient to contact the locker bank location provider.

With reference to FIG. 6, the above-described infrastructure may also be used to accommodate returns from field operatives to the distribution center. That is, when a field operative receives the wrong part, or has parts left over that will not be used, the same locker box system may be used to deliver the goods back to the distribution center so that they do not go to waste. This also eliminates the need for the field operative to personally deliver the goods back to the distribution center.

In step 601, a field operative initiates a return request at a locker bank. This may be performed by entering a request using input device 310. In step 603 the locker bank queries the locker management system 221 for an available locker. Alternatively, memory 335 local to the locker bank may manage the available lockers, and determine which locker to which a shipment may be assigned without communicating in realtime to the central server. In this manner a dedicated connection between each locker bank and the central server is not required. In step 605, the locker management system will select an unassigned locker and transmit the selected locker and open code information to the querying locker bank. The selected locker may be at least as large as the locker first used to deliver the goods, if this information is known, it may be randomly assigned, or assigned by another algorithm. The open code information may alternatively originate with the locker bank after the locker is assigned to the return parcel.

Upon receipt of the information corresponding to the selected locker, the locker bank causes the selected locker to open in step 607. In step 609, the field operative places a parcel containing the goods to be returned in the selected locker. Information about the returned goods and the locker in which they are placed is transmitted to the distribution center in step 611. In step 613, delivery personnel retrieves the parcel from the locker and transports it back to the distribution center.

Alternatively, the return request may be initiated via a web page or other remote access device providing a connection to the central server. The central server sends the return information to the locker bank so that the locker bank is expecting the return. Either the locker bank or the central server may generate the locker and code information.

While the invention has been described with respect to specific examples including presently preferred modes of carrying out the invention, those skilled in the art will appreciate that there are numerous variations and permutations of the above described systems and techniques that fall within the scope of the invention as set forth in the appended claims.

## Claims

1. A method of distributing a parcel to a remote location, the method comprising:
providing a server (201) connected to remote storage locker banks (203, 203a, 203b), each of them comprising a plurality of lockers (1-24), wherein the server (201) comprises a web server (215), an application server (217) and a locker management system (221) to control communications with the remote storage locker banks (203, 203a, 203b);
providing a distribution center (211) with a client computer (209) located in the distribution center (211), wherein within the client computer (209), a web browser (231) is used to interact with the locker management system (221) via a network, the web server (215), and the application server (217);
receiving (401) at the distribution center (211) a request for a desired parcel from a field operative using a remote unit (207), wherein in the distribution center (211), the parcel has a delivery label placed on the outside of it with information regarding a locker bank (203, 203a, 203b) to which the parcel is to be delivered, a specific locker (1-24) in which the parcel is to be placed, and first key information for opening the locker (1-24);
selecting (404) one of the plurality of storage lockers (1-24) in which the parcel is to be placed;
electronically transmitting (405) from the distribution center (211) the same locker information as is on the label to the server computer (201) using the client computer (209);
transmitting (407) to the field operative information corresponding to the remote storage locker (1-24) by communicating from the distribution center (211) locker information and second key information to the remote unit (207) of the requesting field operative; and
delivering (409) the desired parcel from the distribution center (211) to the selected one of the plurality of remote storage lockers (1-24).

2. A method according to claim 1, wherein the information comprises a locker identity.

3. A method according to claim 2, wherein the information further comprises key information with which to open the one remote storage locker (1-24).

4. A system for distributing a parcel to a remote location, comprising:
a server (201) connected to remote storage locker banks (203, 203a, 203b), each of them comprising a plurality of lockers (1-24), wherein the server (201) comprises a web server (215), an application server (217) and a locker management system (221) to control communications with the remote storage locker banks (203, 203a, 203b);
a distribution center (211) with a client computer (209) located in the distribution center (211), wherein within the client computer (209), a web browser (231) is used to interact with the locker management system (221) via a network, the web server (215), and the application server (217); and
a processor operable to:
receive (401) at the distribution center (211) a request for a desired parcel from a field operative using a remote unit (207), wherein in the distribution center (211), the parcel has a delivery label placed on the outside of it with information regarding a locker bank (203, 203a, 203b) to which the parcel is to be delivered, a specific locker (1-24) in which the parcel is to be placed, and first key information for opening the locker (1-24);
select (404) one of the plurality of storage lockers (1-24) in which the parcel is to be placed;
electronically transmit (405) from the distribution center (211) the same locker information as is on the label to the server computer (201) using the client computer (209);
transmit (407) to the field operative information corresponding to the remote storage locker (1-24) by communicating from the distribution center (211) locker information and second key information to the remote unit (207) of the requesting field operative; and
deliver (409) the desired parcel from the distribution center (211) to the selected one of the plurality of remote storage lockers (1-24).

## Patentansprüche

1. Verfahren zum Verteilen eines Pakets an eine entfernte Stelle, wobei das Verfahren umfasst:
Bereitstellen eines Servers (201), der mit entfernten Aufbewahrungsschließfächergruppen bzw. -banken (203, 203a, 203b) verbunden ist, die jeweils eine Mehrzahl von Schließfächern (1-24) umfassen, wobei der Server (201) einen Webserver (215), einen Anwendungsserver (217) und ein Schließfachverwaltungssystem (221) umfasst, um Kommunikationen mit den entfernten Aufbewahrungsschließfächergruppen bzw. -banken (203, 203a, 203b) zu steuern bzw. zu regeln;
Bereitstellen eines Verteilungscenters (211) mit einem Client-Computer (209), der sich in dem Verteilungscenter (211) befindet, wobei innerhalb des Client-Computers (209) ein Webbrowser (231) zum Interagieren mit dem Schließfachverwaltungssystem (221) über ein Netzwerk, dem Webserver (215) und dem Anwendungsserver (217) verwendet wird;
Empfangen (401), an dem Verteilungscenter (211), einer Anfrage nach einem gewünschten Paket von einem Vor-Ort-Berechtigten bzw. -Arbeiter (Engl.: field operative) unter Verwendung einer entfernten Einheit (207), wobei in dem Verteilungscenter (211) dem Paket ein Lieferetikett auf der Außenseite davon platziert wird, und zwar mit Informationen zu der Schließfachgruppe bzw. -bank (203, 203a, 203b), an die das Paket zu liefern ist, einem spezifischen Schließfach (1-24), in dem das Paket zu platzieren ist, und ersten Schlüsselinformationen bzw. Erstschlüsselinformationen zum Öffnen des Schließfachs (1-24);
Auswählen (404) eines der Mehrzahl von Aufbewahrungsschließfächern (1-24), in dem das Paket zu platzieren ist;
elektronisches Übertragen (405), von dem Verteilungscenter (211), derselben Schließfachinformationen, die auf dem Etikett sind, an den Servercomputer (201) unter Verwendung des Clientcomputers (209);
Übertragen (407), an den Vor-Ort-Berechtigten bzw. -Arbeiter, von Informationen entsprechend dem entfernten Aufbewahrungsschließfach (1-24) durch Kommunizieren, von dem Verteilungscenter (211), von Schließfachinformationen und zweiten Schlüsselinformationen bzw. Zweitschlüsselinformationen an die entfernte Einheit (207) des anfragenden Vor-Ort-Berechtigten bzw. -Arbeiters; und
Liefern (409) des gewünschten Pakets von dem Verteilungscenter (211) an das ausgewählte der Mehrzahl entfernter Aufbewahrungsschließfächer (1-24).

2. Verfahren nach Anspruch 1, wobei die Informationen eine Schließfachidentität umfassen.

3. Verfahren nach Anspruch 2, wobei die Informationen ferner Schlüsselinformationen umfassen, mit denen das eine entfernte Aufbewahrungsschließfach (1-24) zu öffnen ist.

4. System zum Verteilen eines Pakets an eine entfernte Stelle, umfassend:
einen Server (201), der mit entfernten Aufbewahrungsschließfächergruppen bzw. -banken (203, 203a, 203b) verbunden ist, die jeweils eine Mehrzahl von Schließfächern (1-24) umfassen, wobei der Server (201) einen Webserver (215), einen Anwendungsserver (217) und ein Schließfachverwaltungssystem (221) umfasst, um Kommunikationen mit den entfernten Aufbewahrungsschließfächergruppen bzw. -banken (203, 203a, 203b) zu steuern bzw. zu regeln;
ein Verteilungscenter (211) mit einem Client-Computer (209), der sich in dem Verteilungscenter (211) befindet, wobei innerhalb des Client-Computers (209) ein Webbrowser (231) zum Interagieren mit dem Schließfachverwaltungssystem (221) über ein Netzwerk, dem Webserver (215) und dem Anwendungsserver (217) verwendet wird; und
einen Prozessor, der betriebsfähig ist zum:
Empfangen (401), an dem Verteilungscenter (211), einer Anfrage nach einem gewünschten Paket von einem Vor-Ort-Berechtigten bzw. -Arbeiter (Engl.: field operative) unter Verwendung einer entfernten Einheit (207), wobei in dem Verteilungscenter (211) dem Paket ein Lieferetikett auf der Außenseite davon platziert wird, und zwar mit Informationen zu der Schließfachgruppe bzw. -bank (203, 203a, 203b), an die das Paket zu liefern ist, einem spezifischen Schließfach (1-24), in dem das Paket zu platzieren ist, und ersten Schlüsselinformationen bzw. Erstschlüsselinformationen zum Öffnen des Schließfachs (1-24);
Auswählen (404) eines der Mehrzahl von Aufbewahrungsschließfächern (1-24), in dem das Paket zu platzieren ist;
elektronischen Übertragen (405), von dem Verteilungscenter (211), derselben Schließfachinformationen, die auf dem Etikett sind, an den Servercomputer (201) unter Verwendung des Clientcomputers (209);
Übertragen (407), an den Vor-Ort-Berechtigten bzw. -Arbeiter, von Informationen entsprechend dem entfernten Aufbewahrungsschließfach (1-24) durch Kommunizieren, von dem Verteilungscenter (211), von Schließfachinformationen und zweiten Schlüsselinformationen bzw. Zweitschlüsselinformationen an die entfernte Einheit (207) des anfragenden Vor-Ort-Berechtigten bzw. -Arbeiters; und
Liefern (409) des gewünschten Pakets von dem Verteilungscenter (211) an das ausgewählte der Mehrzahl entfernter Aufbewahrungsschließfächer (1-24).

## Revendications

1. Procédé de distribution d'un colis à un emplacement distant, le procédé comprenant :
fournir un serveur (201) connecté à des banques de casiers de stockage distants (203, 203a, 203b), chacune d'elles comprenant une pluralité de casiers (1 à 24), dans lequel le serveur (201) comprend un serveur Web (215), un serveur d'application (217) et un système de gestion de casiers (221) pour commander des communications avec les banques de casiers de stockage distants (203, 203a, 203b) ;
fournir un centre de distribution (211) avec un ordinateur client (209) situé dans le centre de distribution (211), dans lequel un navigateur Web (231) est utilisé pour interagir avec le système de gestion de casiers (221) par le biais d'un réseau, du serveur Web (215) et du serveur d'application (217) au sein de l'ordinateur client (209) ;
recevoir (401) au centre de distribution (211) une requête pour un colis souhaité provenant d'un technicien volant utilisant un module distant (207), dans lequel le colis a une étiquette de livraison placée sur son extérieur, avec des informations concernant une banque de casiers (203, 203a, 203b) à laquelle le colis doit être livré, un casier spécifique (1 à 24) dans lequel le colis doit être placé et des premières informations clés pour ouvrir le casier (1 à 24), dans le centre de distribution (211) ;
sélectionner (404) un de la pluralité de casiers de stockage (1 à 24) dans lequel le colis doit être placé ;
transmettre électroniquement (405) depuis le centre de distribution (211) les mêmes informations de casier que celles sur l'étiquette à l'ordinateur serveur (201) en utilisant l'ordinateur client (209) ;
transmettre (407) au technicien volant des informations correspondant au casier de stockage distant (1 à 24) en communiquant depuis le centre de distribution (211) des informations de casier et des secondes informations clés au module distant (207) du technicien volant à l'origine de la requête ; et
livrer (409) le colis souhaité du centre de distribution (211) au casier sélectionné de la pluralité de casiers de stockage distants (1 à 24).

2. Procédé selon la revendication 1, dans lequel les informations comprennent une identité de casier.

3. Procédé selon la revendication 2, dans lequel les informations comprennent en outre des informations clés avec lesquelles ouvrir le casier de stockage distant (1 à 24).

4. Système de distribution d'un colis à un emplacement distant comprenant :
un serveur (201) connecté à des banques de casiers de stockage distants (203, 203a, 203b), chacune d'elles comprenant une pluralité de casiers (1 à 24), dans lequel le serveur (201) comprend un serveur Web (215), un serveur d'application (217) et un système de gestion de casiers (221) pour commander des communications avec les banques de casiers de stockage distants (203, 203a, 203b) ;
un centre de distribution (211) avec un ordinateur client (209) situé dans le centre de distribution (211), dans lequel un navigateur Web (231) est utilisé pour interagir avec le système de gestion de casiers (221) par le biais d'un réseau, du serveur Web (215) et du serveur d'application (217) au sein de l'ordinateur client (209) ; et
un processeur pouvant opérer pour :
recevoir (401) au centre de distribution (211) une requête pour un colis souhaité provenant d'un technicien volant utilisant un module distant (207), dans lequel le colis a une étiquette de livraison placée sur son extérieur, avec des informations concernant une banque de casiers (203, 203a, 203b) à laquelle le colis doit être livré, un casier spécifique (1 à 24) dans lequel le colis doit être placé et des premières informations clés pour ouvrir le casier (1 à 24), dans le centre de distribution (211) ;
sélectionner (404) un de la pluralité de casiers de stockage (1 à 24) dans lequel le colis doit être placé ;
transmettre électroniquement (405) depuis le centre de distribution (211) les mêmes informations de casier que celles sur l'étiquette à l'ordinateur serveur (201) en utilisant l'ordinateur client (209) ;
transmettre (407) au technicien volant des informations correspondant au casier de stockage distant (1 à 24) en communiquant depuis le centre de distribution (211) des informations de casier et des secondes informations clés au module distant (207) du technicien volant à l'origine de la requête ; et
livrer (409) le colis souhaité du centre de distribution (211) au casier sélectionné de la pluralité de casiers de stockage distants (1 à 24).
